# FASCICULE DE BREVET EUROPEEN

(11) **EP 2 519 413 B1**
(45) Date de publication et mention de la délivrance du brevet: **26.02.2014**
(21) Numéro de dépôt: 10800948.1
(22) Date de dépôt: 29.12.2010
(51) Int. Cl.: B60C 11/11

(54) **BANDE DE ROULEMENT DE PNEU POUR VEHICULE DEUX ROUES**
REIFENPROFIL FÜR EIN ZWEIRÄDRIGES FAHRZEUG
TIRE TREAD FOR A TWO-WHEEL VEHICLE

(30) Priorité: 30.12.2009 FR 0959664
(43) Date de publication de la demande: 07.11.2012
(73) Titulaire: Compagnie Générale des Etablissements Michelin, 63000 Clermont-Ferrand (FR); Michelin Recherche et Technique S.A., 1763 Granges-Paccot (CH)
(72) Inventeur: LARREGAIN, Arnaud, F-63300 Thiers (FR); JARA, Adam, F-63100 Clermont-Ferrand (FR); MUHLHOFF, Olivier, F-63119 Chateaugay (FR); GODRIE, Olivier, F-63200 Riom (FR)
(74) Mandataire: Diernaz, Christian
(86) Numéro de dépôt international: PCT/EP2010/070852
(87) Numéro de publication internationale: WO 2011/080298

(56) Documents cités:
- US-A- 5 377 734

## Description

### DOMAINE DE L'INVENTION

La présente invention est relative aux sculptures ou motifs en relief formés sur une bande de roulement d'un pneu vélo en vue de lui conférer un bon contact antidérapant sur un sol. Elle vise notamment une amélioration du contact entre le pneu et un sol, et plus particulièrement une amélioration du contact sur un sol glissant ou rendu glissant, tel qu'un revêtement très lisse qu'il soit naturel ou synthétique, comme par exemple des bandes de couleur formées sur une chaussée, des pavés, surtout lorsque ce sol est mouillé par un liquide ou recouvert de glace.

### ÉTAT DE LA TECHNIQUE

Un pneu pour vélo comprend une bande de roulement destinée à venir en contact selon une surface de contact avec la chaussée sur laquelle roule le vélo. Dans cette surface de contact, il est essentiel que la matière composant la bande de roulement vienne en contact avec la chaussée en éliminant la présence de tout élément intermédiaire entre ladite matière et la chaussée. Une réduction de la surface de contact liée à la présence d'un élément intermédiaire provoque une perte d'adhérence qui peut conduire à la chute du cycliste lors d'une manoeuvre de virage ; cette perte d'adhérence constitue d'ailleurs une des causes les plus fréquentes d'accidents.

Le brevet US-5377734 décrit un pneu pour véhicule à deux roues destiné à un usage tout terrain dont la bande de roulement est pourvue d'éléments de relief sous forme de blocs présentant des branches, ces branches formant entre elles des parties en retrait. L'invention améliore très sensiblement les performances en adhérence d'une telle bande de roulement.

### Définitions :

Le taux de creux d'une sculpture est égal au rapport entre la surface des creux (rainures) délimités par les blocs et la surface totale (surface de contact des blocs et surface des creux). Un taux de creux faible indique une grande surface de contact des blocs et une faible surface de creux entre les blocs.

Plan médian équatorial : c'est un plan perpendiculaire à l'axe de rotation et passant par les points du pneu radialement les plus éloignés dudit axe.

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

### BREF EXPOSÉ DE L'INVENTION

La présente invention vise à apporter des solutions de sculptures pour bande de roulement d'un pneu vélo qui améliorent l'adhérence pneu sur la chaussée, en particulier pour les chaussées rendues glissantes.

A cet effet, l'invention a pour objet une sculpture de bande de roulement d'un pneu pour vélo permettant d'améliorer l'adhérence de cette bande lors d'un roulage sur une surface d'utilisation susceptible d'être rendue glissante soit par son état de surface soit par la présence d'un corps étranger intermédiaire entre ladite surface d'utilisation et la bande de roulement, cette sculpture comprenant une pluralité d'éléments de sculpture indépendants les uns des autres et faisant saillie vers l'extérieur de la bande de roulement sous la forme de blocs séparés les uns des autres par des rainures. Ces blocs comprennent une face de contact destinée à venir en contact avec la surface d'utilisation pendant le roulage du pneu et des faces latérales coupant la face de contact pour former des arêtes délimitant un contour de la face de contact ayant une forme à plusieurs branches, chaque branche se terminant par une pointe dont l'angle est au moins égal à 20 degrés et au plus égal à 90 degrés. Prises deux à deux, les branches de chaque bloc déterminent entre elles des parties en retrait, c'est-à-dire des parties plus proche du centre géométrique de la face de contact que chacune des pointes. Selon une caractéristique préférée, l'angle de chaque pointe est égal à 80 degrés (plus ou moins 3 degrés). Préférentiellement, la face de contact est délimitée par un contour comprenant au moins six branches.

En outre, chaque bloc est pourvu de fentes ou incisions, ces fentes aboutissant à une de leurs extrémités dans un des retraits formés sur la face du bloc et en un même point à l'autre extrémité de manière à créer des motifs élémentaires comprenant au moins deux pointes de la face de contact, lesdits motifs élémentaires d'un même bloc interagissant par contact entre eux dans le passage du contact avec la surface d'utilisation. De plus, dans au moins une partie de la bande de roulement, les blocs ont des orientations décalées angulairement les unes par rapport aux autres en fonction de leur position axiale par rapport au plan médian équatorial.

De cette façon, au moins certaines des pointes des blocs sont orientées suivant des directions qui font un angle nul avec la direction circonférentielle sur ou au voisinage du plan médian équatorial et d'autres avec un angle augmentant avec l'éloignement par rapport audit plan médian. Ainsi lors d'un virage, le pilote du véhicule deux roues se penchant du côté où il veut tourner, les blocs actifs de la bande de roulement deviennent les blocs qui sont situés du même côté par rapport au plan médian équatorial, ces blocs étant plus éloignés du plan médian équatorial. Ainsi, grâce à la disposition selon l'invention les pointes des blocs actifs sont orientées sensiblement perpendiculairement à la courbe limite de l'empreinte de contact, ce qui est particulièrement favorable à la fois pour former une sorte d'étrave coupant un éventuel film d'eau (par temps de pluie notamment) ou pour, en quelque sorte, agripper le sol par les pointes.

Par ailleurs, l'orientation des fentes est telle que ces fentes tournent d'un angle moyen qui est fonction de la position du bloc dans lequel sont faites les fentes par rapport au plan équatorial.

Ces fentes ont préférentiellement des profondeurs au moins égales à 50% de la hauteur des blocs, cette hauteur étant mesurée comme la hauteur des faces latérales desdits blocs.

Les fentes permettent d'assouplir chaque bloc dans le sens radial (c'est-à-dire dans le sens de son épaisseur) dans sa partie centrale et conduisent à une augmentation du nombre d'arêtes pour augmenter les surpressions locales et assurer un drainage supplémentaire dans chaque fente.

Préférentiellement, les fentes se coupent toutes au centre géométrique de la face de contact de chaque bloc.

Les recherches des demandeurs ont montré qu'il convenait d'utiliser des motifs qui non seulement possèdent les caractéristiques intrinsèques de forme et d'angle comme décrites ci-dessus, mais qui sont suffisamment petits pour multiplier les points d'attaque dans la substance intermédiaire glissante. Il a été mis en évidence que les motifs précédemment décrits sont particulièrement efficaces dès lors que leur face de contact à l'état neuf est inscriptible dans un cercle de rayon au plus égal à 10 millimètres (mm) et de préférence compris entre 2 et 8 mm.

Dans un mode de réalisation, le taux de creux de cette sculpture de bande est au plus égal à 75% et préférentiellement au plus égal à 60% afin de favoriser l'étendue potentielle des contacts adhérents avec la route.

Dans un mode de réalisation, les deux moitiés de bande de roulement sont symétriques par rapport au plan équatorial.

Dans un mode de réalisation et sur une moitié de la bande de roulement, les fentes de ces blocs tournent dans un sens en allant du bloc situé au voisinage du plan équatorial vers l'un des bords de la bande de roulement, tandis que sur l'autre moitié de bande de roulement les fentes tournent dans le sens inverse.

Dans un autre mode de réalisation, il est prévu de disposer sur le plan médian équatorial une pluralité de blocs pourvus d'au moins une fente orientée dans la direction circonférentielle (c'est-à-dire dans une direction tangente à un cercle centré sur l'axe de rotation). Cette variante est intéressante puisque l'on peut ainsi améliorer la directivité du pneu, c'est-à-dire la faculté pour le pneu à suivre au mieux une trajectoire rectiligne, notamment sur une surface d'utilisation rendue glissante.

Dans un mode préférentiel de réalisation, les centres géométriques des blocs situés de part et d'autre du plan médian équatorial sont placés sur des lignes obliques symétriques par rapport audit plan équatorial. Par placés sur des lignes obliques, on entend que les centres géométriques des blocs sont sur situés sur lesdites lignes obliques.

De façon préférentielle, l'angle des lignes obliques suivant lesquelles sont disposés les centres géométriques des blocs est au moins égal à 20 degrés et au plus égal à 45 degrés par rapport à une direction circonférentielle. Encore plus préférentiellement cet angle est égal à 30 degrés par rapport une direction circonférentielle. L'angle de ces lignes est égal à l'angle que fait, avec le plan médian équatorial, un plan virtuel coupant la surface de la bande de roulement, ce plan virtuel passant par les centres géométriques des blocs.

Selon une variante intéressante de l'invention, les blocs sont disposés les uns par rapport aux autres de manière à ce que au moins une pointe d'un bloc soit engagée dans un retrait d'un bloc voisin sur la ligne oblique. Un bloc est dit voisin d'un autre bloc sur une ligne oblique dès lors que ces deux blocs ont leurs centres géométriques sur ou sensiblement sur cette ligne oblique et qu'ils délimitent entre eux un même creux ou une même rainure.

On dit qu'une pointe d'un bloc est engagée dans un retrait d'un bloc voisin dès lors que cette pointe est située au moins en partie à l'intérieur du cercle à l'intérieur duquel est inscrit la face de contact du bloc voisin. Cette disposition peut être combinée de façon avantageuse à l'une quelconque des variantes présentées dans le présent document.

Dans une variante intéressante, on peut prévoir que les parois latérales d'un bloc ont une inclinaison appropriée avec la face de contact de ce bloc de manière à ajuster au mieux les pressions de contact au niveau des arêtes des faces de contact dans le but de faciliter la mise en contact de la bande de roulement avec la surface d'utilisation après avoir traversé le matériau intermédiaire. Ces parois latérales peuvent être perpendiculaires ou non à la face de contact.

Chaque pointe des blocs en s'écrasant progressivement sous l'effort facilite la propagation d'un effort de rupture d'un film d'eau présent par temps de pluie sur une surface d'utilisation depuis la pointe jusque vers le centre du bloc. En outre, du fait que chaque arête n'est jamais strictement parallèle à la surface du sol au moment où le bloc vient en contact avec le sol, il se forme une concentration d'efforts au point d'attaque ce qui facilite la rupture du film d'eau. Ainsi, le contact sec qui s'établit en conséquence produit une forte augmentation de l'adhérence cela d'autant que les pointes des blocs s'accrochent à toute aspérité ou creux du sol formant la rugosité de ce dernier. Ce même mécanisme favorable à l'adhérence se reproduit lorsque le pneu roule par temps sec sur une surface d'utilisation comportant la présence d'un corps solide intermédiaire de nature pulvérulente par exemple.

L'invention concerne également des pneus pour véhicules deux roues ou encore des boyaux employant une bande de roulement selon une des variantes précédemment décrites.

D'autres caractéristiques et avantages de l'invention ressortent de la description faite ci-après en référence aux dessins annexés qui montrent, à titre d'exemples non limitatifs, des formes de réalisation de l'objet de l'invention

### BRÈVE DESCRIPTION DES FIGURES

La figure 1 représente une vue en plan d'une première variante d'une bande de roulement selon l'invention ;
La figure 2 représente une vue en plan d'une deuxième variante d'une bande de roulement selon invention ;
La figure 3 montre une vue en plan d'une troisième variante d'une bande de roulement selon l'invention.

### DESCRIPTION DES FIGURES

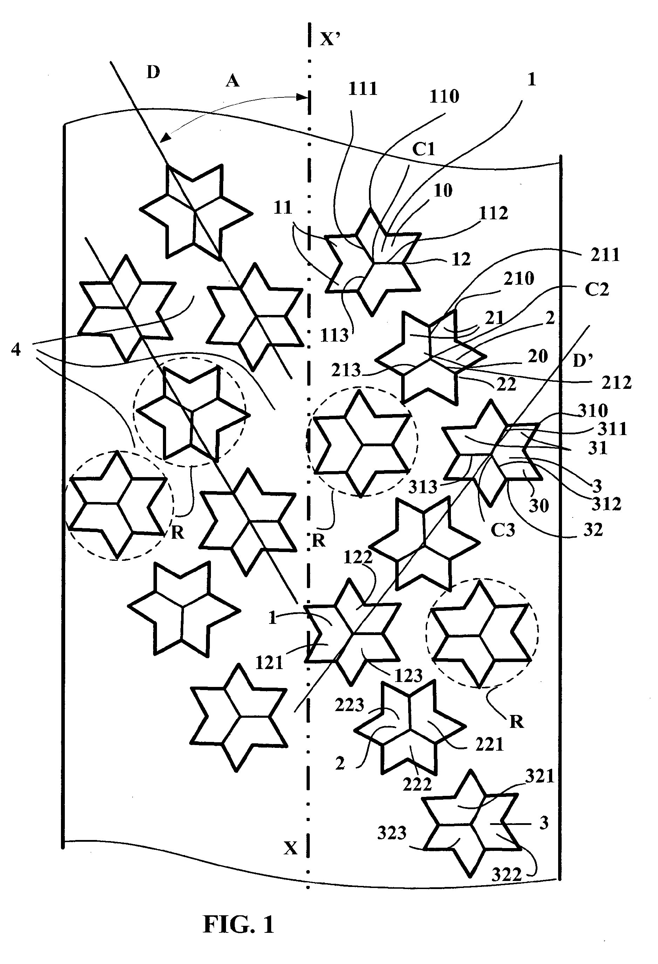

Toutes les variantes décrites avec le support des figures 1 à 3 montrent des blocs comprenant six branches : bien entendu, ces variantes peuvent être aisément transposées par la personne du métier à des blocs comprenant plus de six branches.

La figure 1 montre une vue partielle en plan d'une bande de roulement selon l'invention. Selon cette première variante, la bande de roulement pour véhicule deux roues comprend, de part et d'autre du plan médian équatorial (désigné par sa trace XX' dans le plan de la figure) une pluralité de blocs 1, 2, 3 de forme en étoile régulière à six branches, ces blocs délimitant une pluralité de rainures 4. Chaque bloc 1, 2, 3 comprend une face de contact, respectivement 10, 20, 30 formant une surface de roulement de la bande de roulement, cette surface de roulement étant destinée à venir en contact avec une surface d'utilisation sur laquelle roule un pneu pourvu de cette bande de roulement. Par ailleurs, chaque bloc comprend des parois latérales coupant la face de contact selon des arêtes, les parois latérales étant, dans le cas présenté, perpendiculaires à la face de contact. Les arêtes d'un même bloc délimitent la face de contact selon une géométrie en étoile à six branches. Les blocs 1 sont axialement plus proches du plan médian équatorial représenté par la ligne XX' sur la figure 1, que les autres blocs 2, 3. Les blocs 2 sont axialement situés entre les blocs 1 et les blocs 3, ces derniers étant les plus à l'extérieur axialement. Par direction axiale on entend une direction qui s'étend perpendiculairement à la direction XX' et qui correspond à une direction parallèle à l'axe de rotation du pneu.

Pour chacun des blocs 1, 2, 3, chacune de leurs branches 11, 21, 31 respectivement, s'étend à partir d'un centre géométrique C1, C2, C3 de la forme en étoile pour se terminer par une pointe 110, 210, 310. Chaque pointe 110, 210, 310 forme un angle égal dans le cas présent à 60 degrés. Entre deux pointes d'un même bloc 1, 2, 3 est formé un retrait 12, 22, 32 respectivement dont l'angle est égal à 120 degrés.

Chaque bloc 1, 2, 3 est inscrit dans un cercle de rayon inférieur à 10 mm passant par l'extrémité des pointes (cercle R en traits pointillés). Bien entendu, la taille de chaque bloc 1, 2, 3 pourrait être différente selon la position axiale considérée en fonction du besoin, tout en restant dans les limites de l'invention.

En outre, chaque bloc 1 est pourvu de trois fentes 111, 112, 113 de faible largeur se coupant toutes à une de leurs extrémités au centre géométrique de la face de contact du bloc 1 et aboutissant à leur autre extrémité en un retrait de manière à former entre elles prises deux à deux un angle de 120 degrés. Par faible largeur, on entend ici que ces fentes ont la capacité de se fermer, au moins en partie, lors du roulage d'un pneu pourvu d'une telle bande de roulement de façon à ce que chaque bloc présente une face de contact sans discontinuité. Il en est de même pour chaque bloc 2 qui est pourvu de fentes 211, 212, 213 ainsi que pour chaque bloc 3 pourvu de fentes 311, 312, 313. Ces fentes ont des profondeurs supérieures à 50% de la hauteur des blocs, cette hauteur étant mesurée comme la hauteur des faces latérales desdits blocs

Ces fentes aboutissant dans des retraits de chaque bloc de manière à créer des motifs élémentaires comprenant deux pointes dudit bloc. Par exemple, le bloc 1 est subdivisé en trois motifs élémentaires 121, 122, 123. Chaque motif élémentaire comprend une troisième pointe formée par les fentes sur chaque motif élémentaire. Les motifs élémentaires d'un même bloc interagissent par contact entre eux dans le passage du contact avec la surface d'utilisation, grâce à la fermeture des fentes.

Par ailleurs, les blocs 1, 2, 3 et les fentes dont ils sont pourvus, tournent d'un angle moyen qui est fonction de la position axiale du bloc : si le bloc 1 présente dans le cas montré ici deux pointes orientées dans la direction circonférentielle, les blocs 2, décalés axialement par rapport aux blocs 1, comprennent deux pointes orientées de manière à faire un angle de 30 degrés avec la direction XX' (direction circonférentielle sur le pneu). De même les blocs 3 présentent deux pointes orientées de manière à faire un angle de 60 degrés avec la direction XX'. Tout se passe comme si un même motif de bloc présentait une orientation fonction de la position axiale dudit bloc.

Dans le cas présenté avec cette figure 1, les blocs sont disposés de chaque côté de la bande de roulement de manière à avoir leurs centres géométriques alignés sur des lignes D, D' formant un angle A égal en valeur absolue à 45 degrés. La disposition des blocs de chaque côté du plan médian équatorial est symétrique d'un point de vue de l'angle des lignes sur lesquelles sont disposés les centres géométriques des blocs. Il existe toutefois un décalage circonférentiel entre les blocs d'un côté de la bande de roulement et les blocs de l'autre côté de la bande de roulement.

L'invention n'est pas limitée à la présence de trois fentes dans chaque bloc comprenant six branches, la personne du métier pouvant augmenter ce nombre jusqu'à atteindre le nombre de parties en retrait sur chaque bloc. Mais pour ne pas trop diminuer la rigidité de chaque bloc, il est judicieux de limiter ce nombre de fentes par bloc. Il est possible de réaliser des fentes dont les parois en vis-à-vis sont pourvues de reliefs coopérant entre eux afin de réduire les mouvements relatifs entre ces parois lors du passage dans le contact.

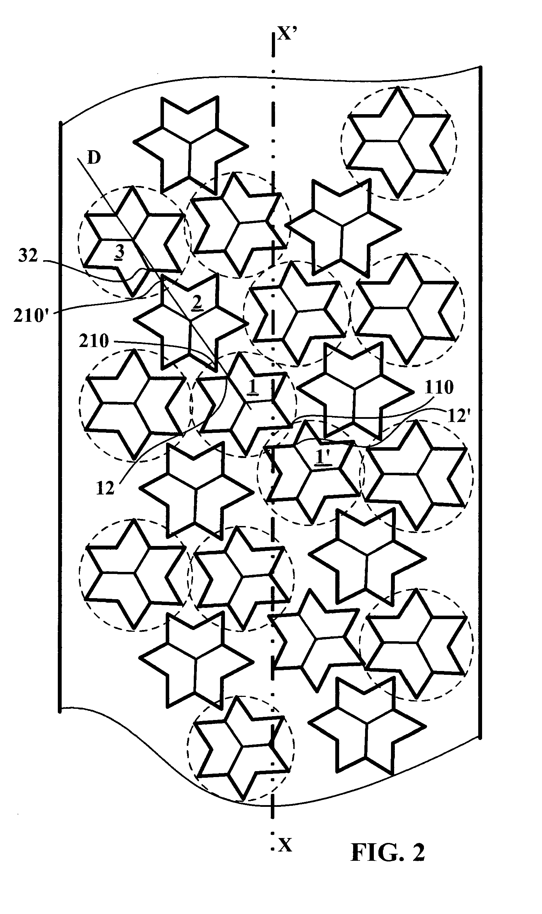

La figure 2 montre une vue partielle en plan d'une bande de roulement qui reprend les blocs (1, 2, 3) de la première variante montrée avec la figure 1. Une différence notable réside dans un taux de creux réduit par rapport à cette première variante. En effet, une pluralité de blocs ont au moins une de leur pointe engagée dans un retrait d'un bloc voisin sur une ligne oblique selon laquelle sont alignés les centres géométriques desdits blocs.

Cela permet, d'augmenter la densité de blocs et également permettre une meilleure efficacité de cette bande de roulement vis-à-vis de la rétention de corps solides comme des cailloux. Par engagée dans un retrait, il faut ici entendre que la partie d'une pointe d'un bloc la plus éloignée du centre géométrique dudit bloc se trouve à l'intérieur du cercle circonscrit aux pointes d'un bloc immédiatement voisin.

Dans le cas présenté, si l'on reprend les mêmes références que celles utilisées pour la figure 1 pour désigner des éléments structurels identiques, on constate que sur une ligne oblique D, un bloc 2 comprend une pointe 210 engagée dans un retrait 12 d'un bloc 1 et une autre pointe 210' engagée dans un retrait 32 d'un bloc 3.

Par ailleurs, un bloc 1 sur un côté de la bande de roulement par rapport au plan médian équatorial XX' comprend une pointe 110 qui est engagée dans un retrait 12' d'un bloc 1' situé sur l'autre côté du même plan équatorial.

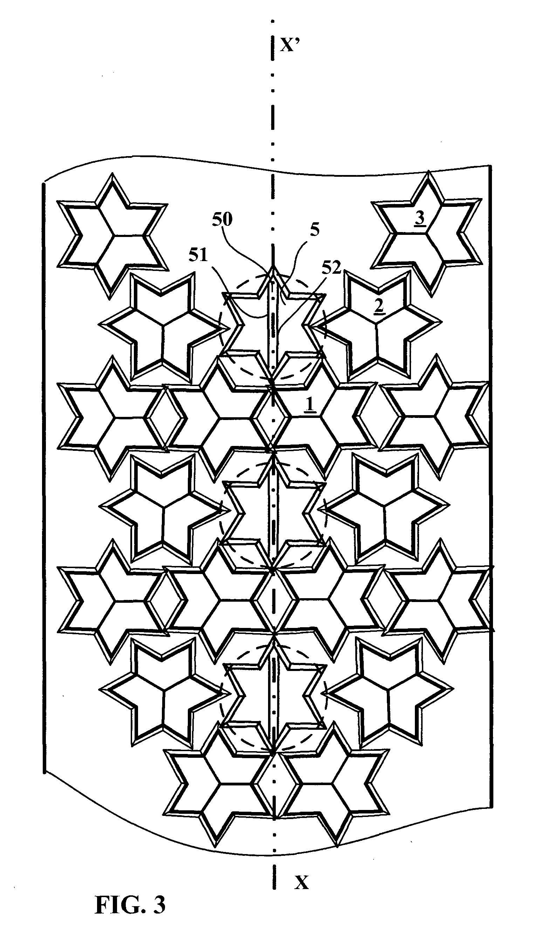

La figure 3 montre une vue partielle d'une troisième variante d'une bande de roulement selon l'invention destinée à équiper un pneu pour véhicule deux roues, ce pneu étant de dimension 42-622. On reprend ici les mêmes références que celles employées avec les figures précédentes pour indiquer des éléments structurels identiques.

Cette bande de roulement est pourvue d'une pluralité de blocs 1, 2, 3 ayant une face de contact en forme d'étoile à six branches, cette face de contact étant, à l'état neuf, contenue dans un cercle de rayon égal à 8.3 mm. L'angle des pointes est de 60 degrés et celui des retraits de 120 degrés.

La hauteur des blocs est comprise entre 3 et 5 mm. Chaque bloc est pourvu avec trois fentes de largeur égale à 0.5 mm et de profondeur au moins égale à 3 mm, ces fentes se coupant toutes au centre géométrique des faces.

Ce pneu a sous ses conditions nominales d'usage une longueur d'empreinte égale comprise entre 60 et 80 mm et une largeur de d'empreinte comprise entre 25 et 35 mm.

Par ailleurs, les parois latérales de chaque bloc forment une dépouille d'angle égal à 10 degrés avec une perpendiculaire à la face de contact dudit bloc. De cette façon, l'aire de la face de contact de chaque bloc augmente progressivement avec l'usure de la bande de roulement.

Par ailleurs, une pluralité de blocs présente un engagement d'au moins une pointe dans un retrait d'un bloc voisin sur une ligne oblique.

Enfin cette troisième variante montre la présence de blocs additionnels 5 alignés sur la trace XX' du plan médian équatorial, c'est-à-dire dont les centres géométriques sont placés sur cette trace XX'. Ces blocs 5 sont sensiblement de même géométrie que les blocs 1 axialement les plus proches du plan médian équatorial et présentent deux pointes alignées avec la direction XX'. En outre, chacun de ces blocs 5 est pourvu avec une rainure 50 orientée circonférentiellement, c'est-à-dire selon la direction XX'. Grâce à la présence de ces rainures générant des arêtes 51, 52 circonférentielles, on augmente la capacité du pneu à conserver une trajectoire rectiligne en roulage ligne droite.

Bien entendu, l'invention n'est pas limitée aux exemples décrits et représentés et diverses modifications peuvent y être apportées sans sortir du cadre défini par les revendications. Notamment, le nombre de pointes de chaque bloc peut être supérieur à six et les dimensions des pointes peuvent être différentes pour un même bloc afin d'être adaptées aux performances recherchées.

## Revendications

1. Bande de roulement de pneu pour véhicule deux roues améliorant l'adhérence en roulage sur une surface d'utilisation susceptible d'être rendue glissante par la présence d'un corps étranger intermédiaire, cette bande de roulement comprenant des blocs (1, 2, 3) séparés les uns des autres par des rainures (4), chaque bloc comprenant une face de contact (10, 20, 30) destinée à venir en contact avec la surface d'utilisation pendant le roulage du pneu et des faces latérales coupant la face de contact pour former des arêtes délimitant un contour de la face de contact ayant une forme géométrique à plusieurs branches, chaque branche (11, 21, 31) se terminant par une pointe (110, 210, 310) dont l'angle est au moins égal à 20 degrés et au plus égal à 90 degrés, chaque pointe (110, 210, 310) étant apte à traverser le corps étranger intermédiaire pour établir un contact direct avec la surface d'utilisation, les branches (11, 21, 31) de chaque bloc (1, 2, 3) prises deux à deux déterminant entre elles des parties en retrait (12, 22, 32), c'est-à-dire des parties plus proches du centre géométrique (C1, C2, C3) de la face de contact que chacune des pointes, cette bande étant **caractérisée en ce que** chaque bloc (1, 2, 3) comprend une face de contact ayant au moins six branches et **en ce que** chaque bloc (1, 2, 3) est pourvu de fentes (111, 112, 113 ; 211, 212, 213 ; 311, 312, 313) respectivement, ces fentes aboutissant à une de leurs extrémités dans un des retraits formés sur la face du bloc et en un même point à l'autre extrémité de manière à créer des motifs élémentaires comprenant au moins deux pointes de la face de contact, lesdits motifs élémentaires d'un même bloc interagissant par contact entre eux dans le passage du contact avec la surface d'utilisation, et **en ce que**, dans au moins une partie de la bande de roulement, les blocs (1, 2, 3) ont des orientations décalées angulairement les unes par rapport aux autres en fonction de leur position axiale par rapport au plan médian équatorial.

2. Bande de roulement selon la revendication 1 **caractérisée en ce que** les fentes (111, 112, 113) d'un bloc (1) se coupent toutes au centre géométrique (C1) de la face de contact dudit bloc.

3. Bande de roulement selon l'une des revendications 1 à 2 **caractérisée en ce que** le décalage angulaire entre les blocs (1, 2, 3) selon leur position axiale est égal à ou sensiblement égal à 30 degrés.

4. Bande de roulement selon l'une des revendications 1 à 3 **caractérisée en ce que** chaque bloc (1, 2, 3) est inscriptible à l'intérieur d'un cercle (R) dont le rayon est au plus égal à 10 millimètres.

5. Bande de roulement selon la revendication 4 **caractérisée en ce que** le rayon du cercle (R) est au plus égal à 8 mm et au moins égal à 2 mm.

6. Bande de roulement selon l'une des revendications 1 à 5 **caractérisée en ce qu'**elle a un taux de creux au plus égal à 75 %.

7. Bande de roulement selon l'une des revendications 1 à 6 **caractérisée en ce que** les fentes des blocs tournent dans un sens en allant du bloc situé au voisinage du plan équatorial vers les blocs de l'un des bords de la bande de roulement, tandis que sur l'autre moitié de bande de roulement les fentes tournent dans le sens inverse.

8. Bande de roulement selon l'une des revendications 1 à 7 **caractérisée en ce qu'**une pluralité de blocs (5) sont disposés sur le plan médian équatorial, ces blocs (5) étant pourvus d'au moins une rainure (50) orientée dans la direction circonférentielle.

9. Bande de roulement selon l'une des revendications 1 à 8 **caractérisée en ce que** les centres géométriques des blocs (1, 2, 3) de part et d'autre du plan médian équatorial sont placés sur des lignes obliques (D, D') symétriques par rapport audit plan équatorial.

10. Bande de roulement selon l'une des revendications 1 à 9, **caractérisée en ce que** l'angle des lignes obliques (D, D') suivant lesquelles sont disposés les centres géométriques des blocs est au moins égal à 20 degrés et au plus égal à 45 degrés par rapport à une direction circonférentielle.

11. Bande de roulement selon l'une des revendications 1 à 10 **caractérisée en ce qu'**une pluralité de blocs (2) présentent au moins une première pointe (210) engagée dans un retrait (12) d'un bloc (1) voisin sur une même ligne oblique (D).

12. Bande de roulement selon l'une des revendications 1 à 11 **caractérisée en ce que** l'angle de chaque pointe est égal à 80 degrés.

13. Pneu pour cycle comportant une bande de roulement telle que définie par l'une quelconque des revendications 1 à 12.

## Patentansprüche

1. Reifenlaufstreifen für ein Zweiradfahrzeug, welcher die Rollhaftung auf eine Nutzungsfläche verbessert, die durch das Vorhandensein eines dazwischen befindlichen Fremdkörpers rutschig werden kann, wobei dieser Laufstreifen Blöcke (1, 2, 3) aufweist, die durch Rillen (4) voneinander getrennt sind, wobei jeder Block eine Kontaktfläche (10, 20, 30), die dazu bestimmt ist, während des Rollens des Reifens mit der Nutzungsfläche in Kontakt zu kommen, sowie Seitenflächen, welche die Kontaktfläche schneiden, um Kanten zu bilden, die eine Kontur der Kontaktfläche mit einer geometrischen Form mit mehreren Zacken begrenzen, aufweist, wobei jeder Zacken (11, 21, 31) in einer Spitze (110, 210, 310) endet, deren Winkel mindestens 20 Grad und höchstens 90 Grad beträgt, wobei jede Spitze (110, 210, 310) geeignet ist, den dazwischen befindlichen Fremdkörper zu durchqueren, um einen direkten Kontakt mit der Nutzungsfläche herzustellen, wobei die Zacken (11, 21, 31) jedes Blocks (1, 2, 3), paarweise betrachtet, zwischen sich rückspringende Abschnitte (12, 22, 32) bestimmen, das heißt Abschnitte, die dem geometrischen Mittelpunkt (C1, C2, C3) der Kontaktfläche näher sind als jede der Spitzen, wobei dieser Laufstreifen **dadurch gekennzeichnet ist, dass** jeder Block (1, 2, 3) eine Kontaktfläche mit mindestens sechs Zacken aufweist, und dadurch, dass jeder Block (1, 2, 3) mit jeweiligen Schlitzen (111, 112, 113; 211, 212, 213; 311, 312, 313) versehen ist, wobei diese Schlitze an einem ihrer Enden in einem der auf der Vorderseite des Blocks gebildeten Rücksprünge und am anderen Ende in ein und demselben Punkt enden, derart, dass elementare Motive erzeugt werden, die mindestens zwei Spitzen der Kontaktfläche enthalten, wobei die elementaren Motive ein und desselben Blocks beim Durchgang durch den Kontakt mit der Nutzungsfläche durch Kontakt miteinander in Wechselwirkung treten, und dadurch, dass in mindestens einem Teil der Lauffläche die Blöcke (1, 2, 3) Ausrichtungen aufweisen, die in Abhängigkeit von ihrer axialen Position bezüglich der äquatorialen Mittelebene winkelmäßig zueinander versetzt sind.

2. Laufstreifen nach Anspruch 1, **dadurch gekennzeichnet, dass** sich die Schlitze (111, 112, 113) eines Blocks (1) alle im geometrischen Mittelpunkt (C1) der Kontaktfläche dieses Blocks schneiden.

3. Laufstreifen nach einem der Ansprüche 1 bis 2, **dadurch gekennzeichnet, dass** der Winkelversatz zwischen den Blöcken (1, 2, 3) gemäß ihrer axialen Position gleich oder im Wesentlichen gleich 30 Grad ist.

4. Laufstreifen nach einem der Ansprüche 1 bis 3, **dadurch gekennzeichnet, dass** jeder Block (1, 2, 3) in einen Kreis (R) einbeschrieben werden kann, dessen Radius höchstens 10 Millimeter beträgt.

5. Laufstreifen nach Anspruch 4, **dadurch gekennzeichnet, dass** der Radius des Kreises (R) höchstens 8 mm und mindestens 2 mm beträgt.

6. Laufstreifen nach einem der Ansprüche 1 bis 5, **dadurch gekennzeichnet, dass** er einen Hohlraumanteil aufweist, der höchstens 75 % beträgt.

7. Laufstreifen nach einem der Ansprüche 1 bis 6, **dadurch gekennzeichnet, dass** sich die Schlitze der Blöcke ausgehend von dem Block, der sich in der Nähe der äquatorialen Ebene befindet, zu den Blöcken des einen der Ränder des Laufstreifens hin in einer Richtung drehen, während sich auf der anderen Hälfte des Laufstreifens die Schlitze in der entgegengesetzten Richtung drehen.

8. Laufstreifen nach einem der Ansprüche 1 bis 7, **dadurch gekennzeichnet, dass** mehrere Blöcke (5) auf der äquatorialen Mittelebene angeordnet sind, wobei diese Blöcke (5) mit mindestens einem Schlitz (50) versehen sind, der in der Umfangsrichtung ausgerichtet ist.

9. Laufstreifen nach einem der Ansprüche 1 bis 8, **dadurch gekennzeichnet, dass** die geometrischen Mittelpunkte der Blöcke (1, 2, 3) beiderseits der äquatorialen Mittelebene auf schrägen Linien (D, D') angeordnet sind, die bezüglich der äquatorialen Ebene symmetrisch sind.

10. Laufstreifen nach einem der Ansprüche 1 bis 9, **dadurch gekennzeichnet, dass** der Winkel der schrägen Linien (D, D'), entlang derer die geometrischen Mittelpunkte der Blöcke angeordnet sind, mindestens 20 Grad und höchstens 45 Grad bezüglich einer Umfangsrichtung beträgt.

11. Laufstreifen nach einem der Ansprüche 1 bis 10, **dadurch gekennzeichnet, dass** mehrere Blöcke (2) mindestens eine erste Spitze (210) aufweisen, die in einen Rücksprung (12) eines Blocks (1) hineinragt, der auf derselben schrägen Linie (D) benachbart ist.

12. Laufstreifen nach einem der Ansprüche 1 bis 11, **dadurch gekennzeichnet, dass** der Winkel an jeder Spitze 80 Grad beträgt.

13. Reifen für ein Fahrrad, der einen Laufstreifen nach einem der Ansprüche 1 bis 12 aufweist.

## Claims

1. Tread for a tyre for a two-wheel vehicle improving grip when running on a usage surface liable to become slippery through the presence of an intermediate foreign body, this tread comprising blocks (1, 2, 3) separated from one another by grooves (4), each block comprising a contact face (10, 20, 30) intended to come into contact with the usage surface as the tyre is running and lateral faces intersecting the contact face to form edge corners delimiting a contour of the contact face having a geometric shape with several branches, each branch (11, 21, 31) ending in a point (110, 210, 310) the angle of which is at least equal to 20 degrees and at most equal to 90 degrees, each point (110, 210, 310) being able to pass through the intermediate foreign body in order to establish direct contact with the usage surface, the branches (11, 21, 31) of each block (1, 2, 3), considered two by two, between them determining setback parts (12, 22, 32), which means parts closer to the geometric centre (C1, C2, C3) of the contact face than each of the points, this tread being **characterized in that** each block (1, 2, 3) comprises a contact face having at least six branches and **in that** each block (1, 2, 3) is provided with slits (111, 112, 113; 211, 212, 213; 311, 312, 313) respectively, these slits terminating at one of their ends in one of the setbacks formed on the face of the block and at a same location at the other end so as to create elementary patterns comprising at least two points of the contact face, the said elementary patterns of one and the same block interacting by contact with one another as they pass through contact with the usage surface, and **in that**, in at least part of the tread, the blocks (1, 2, 3) have orientations that are angularly offset from one another according to their axial position with respect to the equatorial median plane.

2. Tread according to Claim 1, **characterized in that** the slits (111, 112, 113) of a block (1) all intersect at the geometric centre (C1) of the contact face of the said block.

3. Tread according to one of Claims 1 to 2, **characterized in that** the angular offset between the blocks (1, 2, 3) according to their axial position is equal or substantially equal to 30 degrees.

4. Tread according to one of Claims 1 to 3, **characterized in that** each block (1, 2, 3) can be inscribed inside a circle (R) the radius of which is at most equal to 10 millimetres.

5. Tread according to Claim 4, **characterized in that** the radius of the circle (R) is at most equal to 8 mm and at least equal to 2 mm.

6. Tread according to one of Claims 1 to 5, **characterized in that** it has a groove-to-rubber ratio of at most 75%.

7. Tread according to one of Claims 1 to 6, **characterized in that** the slits of the blocks are turned in a direction extending from the block situated near the equatorial plane towards the blocks of one of the edges of the tread, whereas on the other half of the tread the slits are turned in the opposite direction.

8. Tread according to one of Claims 1 to 7, **characterized in that** a plurality of blocks (5) are located on the equatorial median plane, these blocks (5) being provided with at least one groove (50) oriented in the circumferential direction.

9. Tread according to one of Claims 1 to 8, **characterized in that** the geometric centres of the blocks (1, 2, 3) on either side of the equatorial median plane are positioned on oblique lines (D, D') that are symmetric about the said equatorial plane.

10. Tread according to one of Claims 1 to 9, **characterized in that** the angle of the oblique lines (D, D') along which the geometric centres of the blocks are located is at least equal to 20 degrees and at most equal to 45 degrees with respect to a circumferential direction.

11. Tread according to one of Claims 1 to 10, **characterized in that** a plurality of blocks (2) have at least one first point (210) engaged in a setback (12) of a block (1) that is adjacent along one and the same oblique line (D).

12. Tread according to one of Claims 1 to 11, **characterized in that** the angle of each point is equal to 80 degrees.

13. Bicycle tyre comprising a tread as defined by any one of Claims 1 to 12.
